Europäisches Patentamt

European Patent Office

Office européen des brevets

(19)

(11) **EP 1 170 044 A2**

(12) **EUROPEAN PATENT APPLICATION**

(43) Date of publication:
    **09.01.2002 Bulletin 2002/02**

(51) Int Cl.⁷: **A63F 13/10**

(21) Application number: **01110321.5**

(22) Date of filing: **26.04.2001**

(84) Designated Contracting States:
    **AT BE CH CY DE DK ES FI FR GB GR IE IT LI LU
    MC NL PT SE TR**
    Designated Extension States:
    **AL LT LV MK RO SI**

(30) Priority: **04.07.2000 JP 2000202970**

(71) Applicant: **Square Co., Ltd.
    Tokyo 153-8688 (JP)**

(72) Inventor: **Itai, Katsunori, c/o Square Co., Ltd.
    Tokyo 153-8688 (JP)**

(74) Representative:
    **Grünecker, Kinkeldey, Stockmair &
    Schwanhäusser Anwaltssozietät
    Maximilianstrasse 58
    80538 München (DE)**

(54) **Computer readable recording medium recording a program for causing a light source to be displayed on a game screen and the program, and game screen display method and apparatus**

(57)     A light trace expressing a trace generated in a case where a light source is moved in a virtual three-dimensional space can be displayed with higher reality. An initially used table or the like is initialized. Next, a light source or the like is moved by an operation input or the like. Subsequently, perspective transformation is carried out to obtain a position of the light source on a display screen. Next, a polygon having a predetermined width is generated along a new movement locus of the light source on the display screen. Then, transparency of all the generated polygons is raised. In the polygon generated earlier, the transparency increases. Then, a texture in which the brightness is high along the movement locus of the light source and the brightness of a position decreases as the position departs from the movement locus, is mapped to the polygon. Thereafter, $\alpha$ blending is used to draw the polygon on the movement locus of the light source. The drawn image is displayed on the display screen. This is repeated for each display frame until a game ends.

*FIG. 2*

105

| LIGHT TRACE POLYGON TABLE | 200 |
| CURRENT ENTRY LIGHT SOURCE INFORMATION | 300 |
| PRECEDING ENTRY LIGHT SOURCE INFORMATION | 400 |
| LIGHT TRACE TEXTURE | 500 |
| RENDERING INFORMATION | 600 |

EP 1 170 044 A2

**Description**

CROSS REFERENCE TO RELATED APPLICATION

The present disclosure relates to subject matter contained in Japanese Patent Application No. 2000-202970, filed on July 4, 2000, the disclosure of which is expressly incorporated herein by reference in its entirety.

BACKGROUND OF THE INVENTION

1. Field of the Invention

The invention relates to a video game, and particularly to a technique for displaying a light trace when a light source in a virtual three-dimensional space, or the like is moved on a display screen of a display or the like.

2. Description of the Related Art

In a video game, a movement locus of an object moving on a display screen is displayed through a band. For example, in Japanese Patent Laid-Open No. 306391/1999, endpoints of line segments, normal to a sight line direction, with a constant width are calculated while a specific point of a specific body is made a basis. Then, predetermined texture data is mapped to a locus band formed by connecting the calculated endpoints of the line segments, normal to the sight line direction, with the constant width in a past constant period.

On the other hand, on a television screen, when a light source radiating bright light is moved in the screen, there is seen a phenomenon in which a light band remains on a movement locus of the light source. The width of the light band on the screen becomes narrow as time elapses, and finally disappears. Also in a video game or the like, it is desired to display such a light band that its width becomes narrow and disappears as time elapses, on a movement locus of a light source.

As a technique for displaying afterglow, there is a technique disclosed in Japanese Patent Laid-Open No. 2000-107456. In the technique disclosed in this publication, the position, in a game screen, of a tail lamp moving relatively to a view point position is detected for each frame, and on the basis of the detected position for each frame, an afterglow display object of the tail lamp is displayed on the game screen. The afterglow display object is given gradation by glow processing so that the brightness gradually attenuates.

However, in the technique disclosed in Japanese Patent Laid-Open No. 2000-107456, a Y-shaped three-dimensional object is generated as the afterglow display object. For the purpose of forming the Y shape, this afterglow display object is formed of at least three polygons. Thus, according to the positional relationship between the afterglow display object and the view point, there is a case where the polygons constituting the afterglow display object are seen to overlap with each other. In this case, the brightness is extremely changed at the boundary portion of the overlapping polygons.

SUMMARY OF THE INVENTION

An object of the invention is therefore to provide a computer readable recording medium recording a program which can realize afterglow expression with natural brightness even if a light source is drawn in any direction, the program, its method, and a game screen display apparatus.

According to a first aspect of the invention, in a game screen display method for displaying a light source on a game screen, update history of a position of the light source moving in a display screen is acquired, and a movement locus of the light source is judged on the basis of the acquired update history. The method also includes generating a semitransparent object for which brightness corresponding to a distance from the movement locus is set, on the judged movement locus, setting transparency corresponding to a distance from the position of the light source for the generated semitransparent object, and displaying the generated semitransparent object with the set transparency.

When the method is adopted, the semitransparent objects are generated along the movement locus of the light source, and the transparency corresponding to the distance from the position of the light source is set for each of the semitransparent objects. For example, the more distant the semitransparent object is from the position of the light source, the higher the transparency is made. By doing so, the more distant the semitransparent object is from the position of the light source, the more transparent the object becomes, and eventually it is not displayed on the display screen. By this, it is possible to show a light trace disappearing as the light source is moved.

The method may also include updating the game screen for each frame display period, generating the semitransparent object for each of the frame display periods, and displaying the semitransparent object, by setting the transparency of each of the semitransparent objects generated for each of the frame display periods close to transparent, as time elapses. The method may further include displaying each of the semitransparent objects.

Further, there may be previously provided a texture image in which brightness on an arbitrary line segment is highest and brightness of a portion becomes low as a distance from the line segment to the portion becomes large. In generation of each of the semitransparent objects, the texture image is made to relate to each of the semitransparent objects at a positional relationship so that the arbitrary line segment becomes parallel with the movement locus of the light source. When displaying the semitransparent objects, the related texture image is displayed on each of the semitransparent objects.

It is also possible that the semitransparent object in which transparency becomes a predetermined value or lower is made to disappear. This is adopted so that a polygon which is barely seen, even if it is displayed, is discarded to speed up processing and to reduce necessary memory capacity.

Further, in generation of the semitransparent object, it is also possible that a width of each of the semitransparent objects in a direction orthogonal to the movement locus is made to correspond to a size of the light source on the screen before and after the frame display period.

It is possible to prepare a program for causing a computer to execute the game screen display method of the first aspect of the invention. At that time, the modifications to the first aspect as set forth above can also be applied to the program. The program of the invention can be stored in a recording medium or a storage apparatus, for example, a CD-ROM (Compact Disc - Read Only Memory), a DVD (Digital Versatile Disc), a floppy disk, a memory cartridge, a memory, or a hard disk. By loading the program stored in the recording medium or the storage apparatus into the computer, a video game apparatus described below can be realized. Besides, by the recording medium, the program of the invention can be easily distributed and sold as a software product independently from the apparatus. Further, by executing the program of the invention by use of hardware such as a computer, a technique of the invention can be easily carried out by the hardware such as the computer.

According to a second aspect of the invention, a game screen display apparatus includes a computer readable recording medium recording a program for causing a light source to be displayed on a screen, a computer for reading at least a part of the program from the recording medium and executing the program, and a display for displaying a game realized by the program. The computer causes acquisition of update history of a position of the light source moving in a display screen, judgment of a movement locus of the light source on the basis of the acquired update history, and generation of a semitransparent object for which brightness corresponding to a distance from the movement locus is set. The computer also sets transparency corresponding to a distance from the position of the light source for the generated semitransparent object, and displays the generated semitransparent object on a display according to the set transparency.

The various modifications of the first aspect can be applied to the second aspect of the invention.

## BRIEF DESCRIPTION OF THE DRAWINGS

FIG. 1 is an exemplary block structural view of a home game machine.

FIG. 2 is a schematic view showing a state of an exemplary RAM at the time of execution of a game program of the invention.

FIG. 3 is a schematic view of a display screen including a light source.

FIG. 4 is a view showing an exemplary light trace polygon table for the state of FIG. 3.

FIG. 5 is a view showing an exemplary current entry light source information for the state of FIG. 3.

FIG. 6 is a view showing an exemplary preceding entry light source information for the state of FIG. 3.

FIG. 7 is a schematic view of a display screen in a case where the light source in FIG. 3 is moved.

FIG. 8 is a view showing exemplary current entry light source information for the state of FIG. 7.

FIG. 9 is a view showing exemplary preceding entry light source information for the state of FIG. 7.

FIG. 10 is a view showing an exemplary table of a light trace polygon for the state of FIG. 7.

FIG. 11 is a view showing exemplary rendering information for the state of FIG. 7.

FIG. 12 is a view showing an example of a light trace texture.

FIG. 13 is a schematic view of a display screen in a case where the light trace in FIG. 7 is further moved.

FIG. 14 is a view showing exemplary current entry light source information for the state of FIG. 13.

FIG. 15 is a view showing exemplary preceding entry light source information for the state of FIG. 13.

FIG. 16 is a view showing an exemplary light trace polygon table for the state of FIG. 13.

FIG. 17 is a view showing exemplary rendering information for the state of FIG. 13.

FIG. 18 is a view showing a main flow of display processing of an embodiment of the present invention.

FIG. 19 is a view showing an exemplary flow of light trace polygon information generating processing.

FIG. 20 is a view showing an exemplary flow of transparency change processing.

FIG. 21 is a view showing an exemplary processing flow of drawing processing.

FIG. 22 is a view showing an example (first) of the display screen.

FIG. 23 is a view showing an example (second) of the display screen.

FIG. 24 is a view showing an example (third) of the display screen.

FIG. 25 is a view showing an example (fourth) of the display screen.

FIG. 26 is a view showing an example (fifth) of the display screen.

FIG. 27 is a view showing an example (sixth) of the display screen.

FIG. 28 is a view showing an example (seventh) of the display screen.

FIG. 29 is a view showing an example (eighth) of the display screen.

FIG. 30 is a view showing an example (ninth) of the display screen.

## DETAILED DESCRIPTION OF THE PREFERRED EMBODIMENTS

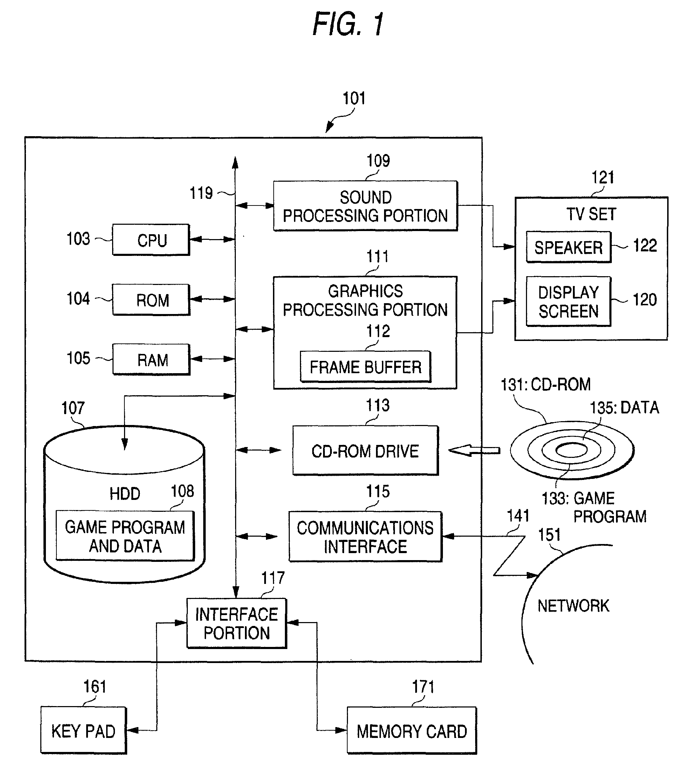

In the case where an embodiment is carried out through a computer program, FIG. 1 shows an example of a home game machine 101 for executing the computer program. The home game machine 101 includes, for example, a CPU (Central Processing Unit) 103, a ROM (Read Only Memory) 104, a RAM (Random Access Memory) 105, an HDD (Hard Disk Drive) 107, a sound processing portion 109, a graphics processing portion 111, a CD-ROM drive 113, a communications interface 115, and an interface portion 117, which are connected to an inner bus 119. The graphics processing portion 111 includes a frame buffer 112. There is also a case where the frame buffer 112 is indicated as a VRAM (Video RAM).

The sound processing portion 109 and the graphics processing portion 111 of the home game machine 101 are connected to a TV set 121 including a display screen 120 and a speaker 122. A detachably attachable CD-ROM 131 is mounted on the CD-ROM drive 113. A game program 133 and data 135 of this embodiment are recorded on the CD-ROM 131. The communications interface 115 is connected to a network 151 through a communications medium 141. A keypad 161 provided with an operation button and a memory card 171 are connected to the interface portion 117.

The CPU 103 executes a program stored in the ROM 104 and the game program 133 recorded on the CD-ROM 131, and controls the home game machine 101. The RAM 105 is a work area of the CPU 103. The HDD 107 is a storage region for storing the game program 133 and the data 135 recorded on, for example, the CD-ROM 131. The memory card 171 is a storage region for storing data to which the game program 133 refers. In the case where the program executed by the CPU 103 issues an instruction to make sound output, the sound processing portion 109 interprets the instruction and outputs a sound signal to the TV set 121. The sound signal is output as sound from the speaker 122 of the TV set 121.

The graphics processing portion 111 generates image data in accordance with drawing instructions output from the CPU 103 and writes it in the frame buffer 112. Then, it outputs a signal for displaying the written image data on the display screen 120 of the TV set 121. The CD-ROM drive 113 reads out the game program 133 and the data 135 on the CD-ROM 131. The communications interface 115 is connected to the network 151 through the communications medium 141, and carries out input/output control of data communications performed with other computers or the like. The interface portion 117 outputs the input from the keypad 161 to the RAM 105, and the CPU 103 interprets the input from the keypad 161 and carries out arithmetic processing.

The game program 133 and the data 135 of this embodiment are first recorded in, for example, the CD-ROM 131. The game program 133 and the data 135 are read out from the CD-ROM 131 at the time of execution and are loaded in the RAM 105. Incidentally, the game program 133 and the data 135 of the invention recorded in the CD-ROM 131 may be previously read out by the CD-ROM drive 113 to be stored in the HDD 107. In the case where the game program and the data 108 of the invention are stored in the HDD 107, the game program and the data 108 are loaded from the HDD 107 into the RAM 105.

The CPU 103 processes the game program 133 and the data 135 of the invention loaded into the RAM 105, and outputs drawing instructions to the graphics processing portion 111. Intermediate data is stored in the RAM 105. The graphics processing portion 111 carries out processing in accordance with the drawing instructions from the CPU 103, writes image data into the frame buffer 112, and outputs a signal for carrying out a display on the display screen 120 of the TV set 121.

An exemplary algorithm of the game program 133 of this embodiment executed in the home game machine as described above and the data used will be described below in detail.

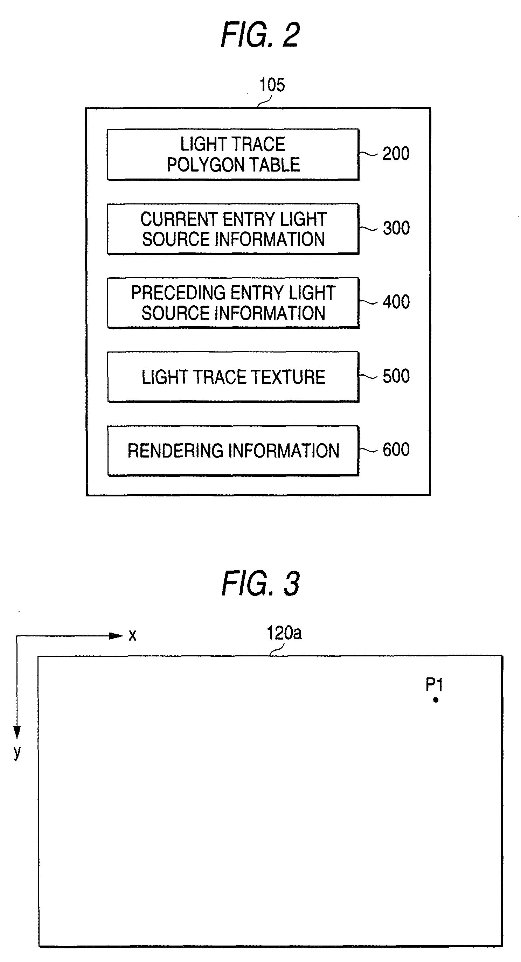

The data used in this embodiment will be described with reference to FIGS. 2 to 4.

FIG. 2 is a schematic view showing an exemplary state of the RAM 105 under execution of the game program 133 of this embodiment. The RAM 105 includes, for example, a light trace polygon table 200, current entry light source information 300 as information of a light source position or the like for a current entry of the light trace polygon table 200, preceding entry light source information 400 as information of a light source position or the like for an entry one before the current entry of the light trace polygon table 200, a light trace texture 500 texture mapped to a light trace polygon, and rendering information 600 used at the time of drawing. The light trace polygon table 200, the current entry light source information 300, the preceding entry light source information 400, and the rendering information 600 are provided for each light source. Incidentally, the game program 133 of this embodiment is also stored in the RAM 105.

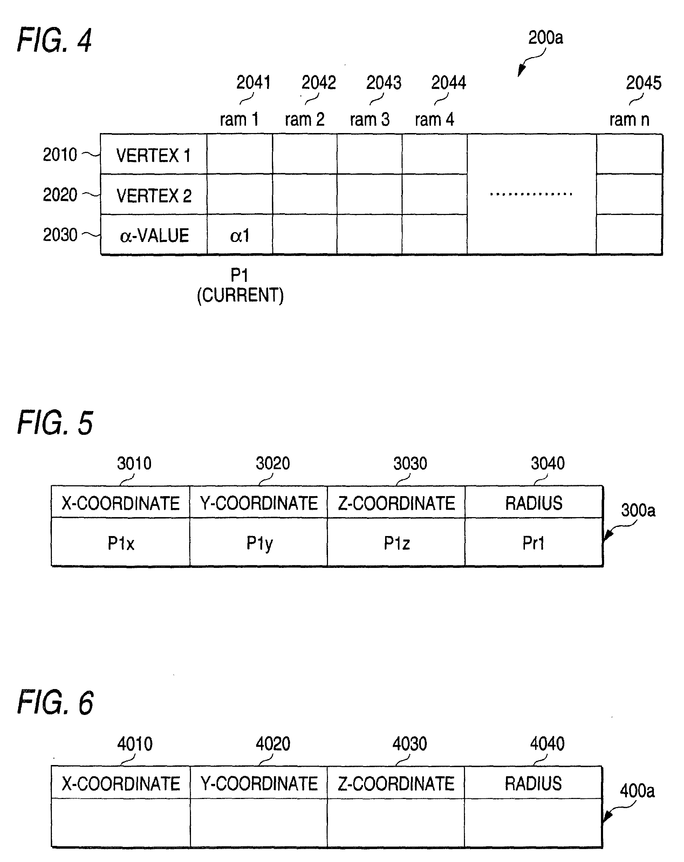

Hereinafter, the respective data stored in the RAM 105 will be described together with the explanation of the principle of the invention. FIG. 3 is a view showing a screen coordinate system. The screen coordinate system is a coordinate system on which an image of an object in a virtual three-dimensional space (world coordinate system) of a game is projected. The image projected on the screen coordinate system is displayed on the display screen 120. As shown in FIG. 3, a first light source position P1 on the screen coordinate system 120a is determined. In the screen coordinate system 120a, an x axis is provided in the horizontal direction, and a y axis is provided in the vertical direction. At this time, the light trace polygon table 200 becomes a light trace polygon table 200a shown in FIG. 4.

FIG. 4 is a view showing the light trace polygon table for the state of FIG. 3. For example, the light trace polygon table 200a is provided with entries 2041, 2042, 2043, 2044 and 2045 for storing data corresponding to positions of n (natural number of 2 or more, for example, 15) light sources. Besides, a line 2010 for storing position coordinates of a vertex 1 as data corresponding to the respective light sources, a line 2020 for storing position coordinates of a vertex 2, and a line 2030 for storing $\alpha$ values are provided to correspond to the respective entries. The $\alpha$ value is a value indicating transparency of a light trace polygon. As the value becomes small; the transparency of the light trace polygon becomes high. For example, in this embodiment, when the value is 1, the light trace polygon becomes opaque, and when the value is 0, the light trace polygon becomes transparent. Incidentally, an entry for storing data corresponding to a first light source is designated by ram 1, an entry for storing data corresponding to a second light source is designated by ram 2, an entry for storing data corresponding to a third light source is designated by ram 3, an entry for storing data corresponding to a fourth light source is designated by ram 4, and an entry for storing data corresponding to an n-th light source is designated by ram n.

In the case where data is registered in the final entry ram n of the light trace polygon table 200a, a return to the first entry ram 1 is made. Besides, although a detailed description will be given below, in the case where the $\alpha$ value stored in the respective entries becomes less than a predetermined threshold value, that is, the transparency becomes more than its predetermined threshold value, the data of the entry is deleted.

Since a movement locus of the light source does not exist in the state shown in FIG. 3, it is impossible yet to generate a polygon. Thus, the light source position P1 is assigned to the entry ram 1, and $\alpha$1 as the $\alpha$ value at the light source P1 is stored in the line 2030 of the $\alpha$ value. For example, $\alpha$1 is 1.0. It is assumed that the $\alpha$ value is a real number from 0 to 1. Incidentally, at present, the entry ram 1 is the current entry.

FIG. 5 is a view showing an example of the current entry light source information 300 in the state shown in FIG. 3.

Current entry light source information 300a shown in FIG. 5 is provided with a column 3010 for storing an x coordinate, in the screen coordinate system, of a light source position to which the current entry is assigned, a column 3020 for storing a y coordinate, a column 3030 for storing a z coordinate, and a column 3040 for storing a radius for determining a width of a light trace polygon. An x coordinate P1x, a y coordinate P1y, a z coordinate P1z, and a radius Pr1 of the light source position P1 are stored in the current entry light source information 300a of FIG. 5.

FIG. 6 is a view showing an example of the preceding entry light source information 400. A preceding entry light source information 400a shown in FIG. 6 is provided with a column 4010 for storing an x coordinate, in the screen coordinate system, of a light source position to which an entry one before the current entry is assigned, a column 4020 for storing a y coordinate, a column 4030 for storing a z coordinate, and a column 4040 for storing a radius for determining a width of a light trace polygon.

As shown in FIG. 3, since only one light source position is determined, a preceding light source position does not exist. Thus, nothing is stored in the preceding entry light source information 400a shown in FIG. 6.

Since a light trace polygon is not generated in the state of FIG. 3, the rendering information 600 does not exist.

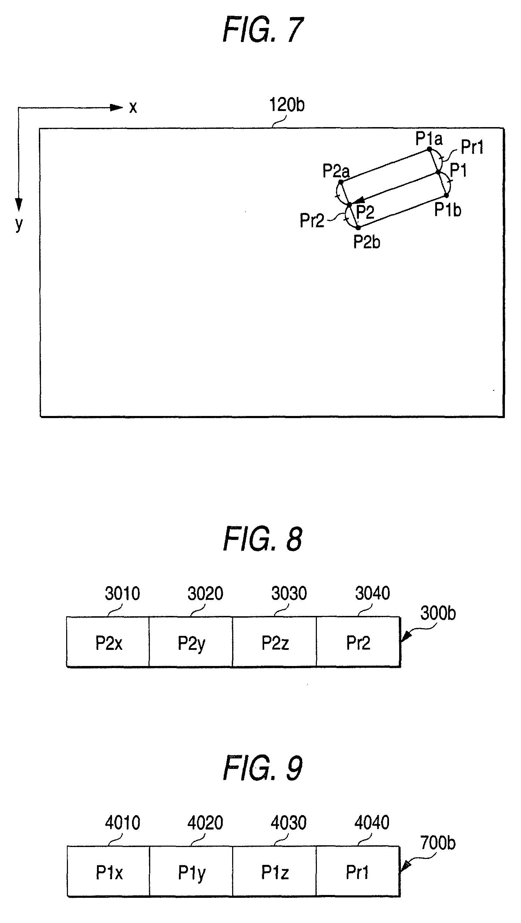

Next, the state of FIG. 3 is shifted to the state of FIG. 7. FIG. 7 is a view showing the screen coordinate system of a frame next to the state shown in FIG. 3. In FIG. 7, a second light source position P2 on the screen coordinate system 120b is determined. That is, the light source was moved on the display screen from the position P1 to the position P2. FIG. 8 shows current entry light source information 300b in the state of FIG. 7. FIG. 9 shows preceding entry light source information 400b in the state of FIG. 7. The information stored in the current entry light source information 300a In FIG. 5 is transferred to the preceding entry light source information 400b. That is, the x coordinate P1x, the y coordinate P1y, the z coordinate P1z, and the radius Pr1 of the preceding light source position P1 are respectively stored in the preceding entry light source information 400b. On the other hand, an x coordinate P2x, a y coordinate P2y, a z coordinate P2z, and a radius Pr2 of the current light source position P2 are respectively stored in the current entry light source information 300b.

Incidentally, the width (radius) Pr1 shown in FIG. 7 is a radius of the light source displayed at the light source position P1 of the screen coordinate system. The width (radius) Pr2 is a radius of the light source displayed at the light source position P2 of the screen coordinate system. A radius of a light source in the screen coordinate system is determined by a distance from a view point to the light source in the world coordinate system and a radius of the light source in the world coordinate system. However, the same width (radius) may be simply used for all points in the screen coordinate system. The width (radius) is determined by a size of the light source.

In the case where the light source is moved on the display screen, a light trace polygon is generated on a movement locus of the light source on the display screen. At this time, the vertexes of the light trace polygon are points P1a (P1ax, P1ay, P1z) and P1b (P1bx, P1by, P1z) which are on a line intersecting with the movement locus at right angles and passing through the point P1, and are separated from the position P1 by the width (radius) Pr1 of the light trace polygon, and points P2a (P2ax, P2ay, P2z) and P2b (P2bx, P2by, P2z) which are on a line intersecting with the movement locus at right angles and passing through the point P2, and are separated from the point P2 by the width (radius) Pr2 of the light trace polygon. Incidentally, the z coordinates of the points P1a and P1b are the same as the z coordinate value of the position P1, and the z coordinates of the points P2a and P2b are the same as the z coordinate value of the position P2. These coordinate values are calculated from the information stored in the current entry light source information 300b and the preceding entry light source information 400b.

Computation expressions become as follows:

$$\text{ang} = \text{a tan} ((P2y - P1y)/(P2x - P1x)) \quad (1)$$

$$P2ax = P2x - Pr2 \times \sin (\text{ang}) \quad (2)$$

$$P2ay = P2y + Pr2 \times \cos (\text{ang}) \quad (3)$$

$$P2az = P2z \quad (4)$$

$$P2bx = P2x + Pr2 \times \sin (\text{ang}) \quad (5)$$

$$P2by = P2y - Pr2 \times \cos (\text{ang}) \quad (6)$$

$$P2bz = P2z \quad (7)$$

$$P1ax = P1x - Pr1 \times \sin (\text{ang}) \quad (8)$$

$$P1ay = P1y + Pr1 \times \cos (\text{ang}) \quad (9)$$

$$P1az = P1z \quad (10)$$

$$P1bx = P1x + Pr1 \times \sin (\text{ang}) \quad (11)$$

$$P1by = P1y - Pr1 \times \cos (\text{ang}) \quad (12)$$

$$P1bz = P1z \quad (13)$$

The term "a tan" expresses arc tangent. Hereinafter, similar calculation can be made by changing subscripts of numerals of the expressions (1) to (7).

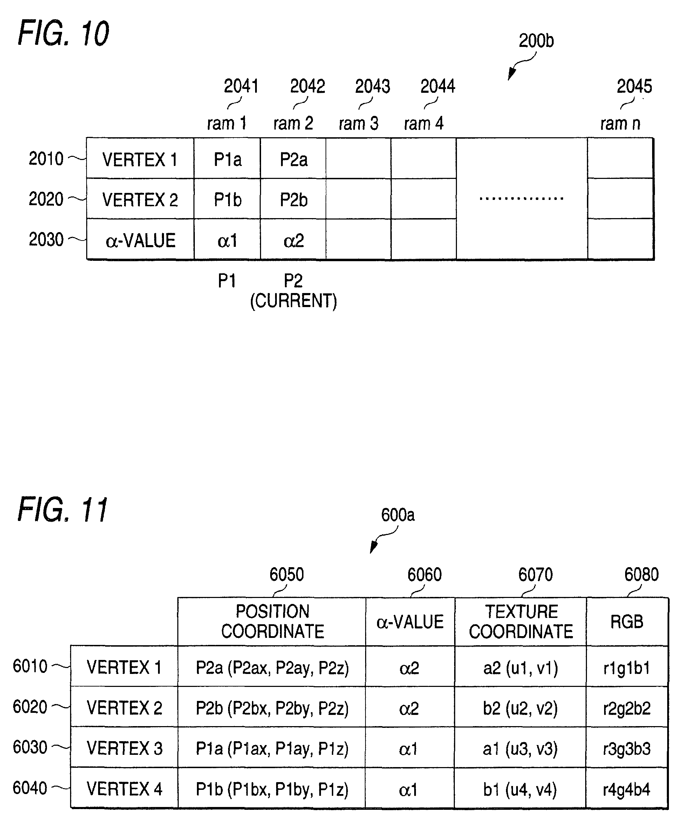

FIG. 10 is a view showing an example of the light trace polygon table 200. In a light trace polygon table 200b shown in FIG. 10, since the light source position is moved, the entry ram 2 becomes a current entry. The coordinate values of the vertexes P1a and P1b of the polygon in relation to the light source position P1 are newly stored in the entry ram 1 assigned to the light source position P1. The value α1 stored in the line 2030 of the α value of the entry ram 1 is changed to a value at which the transparency is raised. For example, a value obtained by multiplying the preceding value of the α value by 0.7 every time the current entry is moved is stored. At present, α1 becomes, for example, 0.7.

Besides, the entry ram 2 is assigned to the light source position P2. The coordinate values of the vertexes P2a and P2b of the polygon in relation to the position P2 are newly stored in the entry ram 2. The value α2 as the α value (for example, 1) at the light source position P2 is stored in the line 2030 of the α value of the entry ram 2.

As shown in FIG. 10, since the light trace polygon is generated and the information of the light trace polygon is obtained, the rendering information 600 is generated. In FIG. 11, a rendering information 600a in the state of FIG. 7 is shown. As shown in FIG. 11, the rendering information 600a includes a line 6010 for storing information as to the vertex 1 of the light trace polygon, a line 6020 for storing information as to the vertex 2, a line 6030 for storing information as to the vertex 3, and a line 6040 for storing information as to the vertex 4. Besides, there are included a column 6050 for storing position coordinates of the respective vertexes, a column 6060 for storing α values of the respective vertexes, a column 6070 for storing texture coordinates of a texture mapped to the light trace polygon, and a column 6080 for storing color information at the respective vertexes of the light trace polygon.

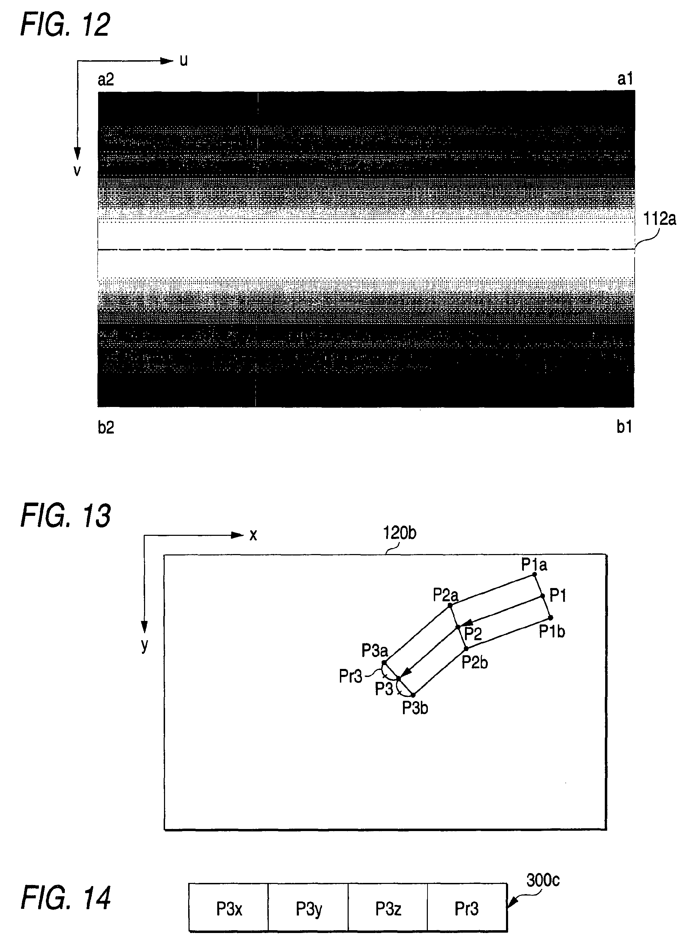

The light trace texture 500 texture mapped to the light trace polygon is stored in the RAM 105. An example of the light trace texture 500 is shown in FIG. 12. An original point of the texture coordinates exists at an upper left vertex a2, the horizontal direction is a u axis, and the vertical direction is a v axis. The original point a2 is connected to a vertex a1 in the u axis direction and a vertex b2 in the v axis direction. The vertex a1 and the vertex a2 are connected to a vertex b1. In this embodiment, a highest brightness portion exists at the center in the vertical direction, and the brightness at a position becomes low as the position becomes high or low from a line 112a at the center in the vertical direction. That is, the brightness at a position becomes low as the position goes away from the center line 112a in the vertical direction. If the center line 112a in the vertical direction and the movement locus of the light source in the display screen overlap with each other, such a polygon is displayed that the brightness on the movement locus is high, and the brightness at a position becomes low as the position goes away from the movement locus. Incidentally, the line 112a is added for explanation of the drawing, and it is not drawn on the light trace texture 500.

Reference is again made to FIG. 11. Information of the vertex P2a as the vertex 1, information of the vertex 2b as the vertex 2, information of the vertex P 1a as the vertex 3, and information of the vertex P1b as the vertex 4 are stored in the rendering information 600a. The position coordinates of the vertex P2a are (P2ax, P2ay, P2z), and the $\alpha$ value is $\alpha2$. The texture coordinates of the vertex P2a are the vertex a2 (u1, v1) of the light trace texture shown in FIG. 12. The colors RGB of the polygon of the vertex P2a are r1, g1 and b1.

The position coordinates of the vertex P2b are (P2bx, P2by, P2z), and the $\alpha$ value is $\alpha2$. The texture coordinates of the vertex P2b are the vertex b2 (u2, v2) of the light trace texture shown in FIG. 12. The colors RGB of the polygon of the vertex P2b are r2, g2 and b2. The position coordinates of the vertex P1a are (P1ax, P1ay, P1z), and the $\alpha$ value is $\alpha1$. The texture coordinates of the vertex P1a are the vertex a1 (u3, v3) of the light trace texture shown in FIG. 12. The colors RGB of the polygon of the vertex P1a are r3, g3 and b3. The position coordinates of the vertex P1b are (P1bx, P1by, P1z), and the $\alpha$ value is $\alpha1$. The texture coordinates of the vertex P1b are the vertex b2 (u4, v4) of the light trace texture shown in FIG. 12. The colors RGB of the polygon of the vertex P1b are r4, g4 and b4. The color of the polygon is a color of light radiated from the light source moving on the display screen. Rendering of the light trace polygon is carried out by the rendering information 600a.

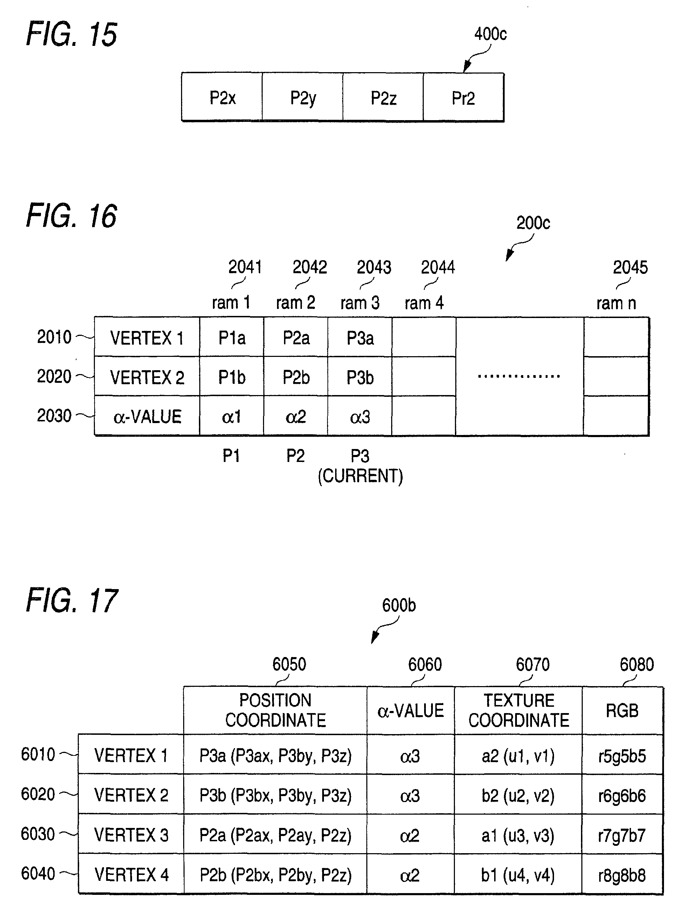

FIG. 13 shows a state where the light source is further moved on the display screen and is moved from the position P2 to a position P3. FIG. 14 shows the current entry light source information 800 corresponding to FIG. 13. FIG. 15 shows the preceding entry light source information 400c corresponding to the state of FIG. 13. The current entry light source information 300b shown in FIG. 8 is used as preceding entry light source information 400c shown in FIG. 15. The values of the current entry light source information 300b in FIG. 9 are stored as the values of preceding entry light source information 400c in FIG. 15. That is, the x coordinate P2x, the y coordinate P2y, the z coordinate P2z and the radius Pr2 of the light source position P2 are stored in the preceding entry light source information 400c. On the other hand, an x coordinate P3x, a y coordinate P3y, a z coordinate P3z, and a radius Pr3 of the light source position P3 are stored in the current entry light source information 300c of FIG. 14.

If the coordinates of the light source positions P1 and P2 of the above described expressions (1), (2), (3), (4), (5), (6) and (7) are respectively replaced with the coordinates of the light source positions P2 and P3 using information of FIG. 12 and calculation is made, the light trace polygon table 200 becomes a light trace polygon table 200c as shown in FIG. 16. That is, the entry ram 3 is assigned to the light source position P3, and the entry ram 3 becomes the current entry. Then, position coordinates (P3ax, P3ay, P3z) of a point P3a as the vertex 1, and position coordinates (P3bx, P3by, P3z) of a point P3b as the vertex 2 are newly stored in correspondence to the light source position P3. Besides, $\alpha3$ as the $\alpha$ value (for example, 1) for the light source position P3 is also stored. When the new entry is added, $\alpha1$ and $\alpha2$ are changed to values at which the transparency is raised. For example, a value obtained by multiplying the preceding value of the $\alpha$ value by 0.7 every time the current entry is moved is stored. The present $\alpha1$ becomes, for example, 0.49, and the present $\alpha2$ becomes, for example, 0.7.

Since the light trace polygon is generated, rendering information as shown in FIG. 17 is added. That is, in addition to the rendering information of FIG. 11 to the first light trace polygon, rendering information 600b for the light trace polygon added by the movement of the light source at this time is generated.

In the rendering information 600b, information of the vertex P3a as the vertex 1, information of the vertex P3b as the vertex 2, information of the vertex P2a as the vertex 3, and information of the vertex P2b as the vertex 4 are stored. The position coordinates of the vertex P3a are (P3ax, P3ay, P3z), and the $\alpha$ value is $\alpha3$. The texture coordinates of the vertex P3a are the vertex a2 (u1, v1) of the light trace polygon shown in FIG. 12. The colors RGB of the polygon of the vertex P3a are r5, g5 and b5.

The position coordinates of the vertex P3b are (P3bx, P3by, P3z), and the $\alpha$ value is $\alpha3$. The texture coordinates of the vertex P3b are the vertex b2 (u2, v2) of the light trace texture shown in FIG. 12. The colors RGB of the polygon of the vertex P3b are r6, g6 and b6. The position coordinates of the vertex P2a are (P2ax, P2ay, P2z), and the $\alpha$ value is $\alpha2$. The texture coordinates of the vertex P2a are the vertex a1 (u3, v3) of the light trace texture shown in FIG. 12. The colors RGB of the polygon of the vertex P2a are r7, g7 and b7. The position coordinates of the vertex P2b are (P2bx, P2by, P2z), and the $\alpha$ value is $\alpha2$. The texture coordinates of the vertex P2b are the vertex b1 (u4, v4) of the light trace texture shown in FIG. 12. The colors RGB of the polygon of the vertex P2b are r8, g8 and b8. Rendering of the light trace polygon is carried out by the rendering information 600a and 600b.

Under the assumption as described above, an exemplary processing flow of this embodiment will be described.

At the time of booting, on the basis of the operating system stored in the ROM 104 or the like, the CPU 103 reads out the game program 133 and the data 135 necessary for the image processing and execution of the game from the CD-ROM 131 through the CD-ROM drive 113, and transfers them to the RAM 105. The CPU 103 executes the game program 133 transferred to the RAM 105, so that processing set forth below is realized.

Incidentally, in control and processing carried out in the home game apparatus 101, there is also a case where a circuit other than the CPU 103 carries out actual control and processing in cooperation with the CPU 103.

The game program 133 and the data necessary for the image processing and the execution of the game are actually sequentially read out from the CD-ROM 131 in accordance with instructions from the CPU 103 and in response to a progress state of the processing. However, in the explanation described below, for the purpose of facilitating the understanding of the embodiment, a description with respect to readout of the data from the CD-ROM 131 and the transfer to the RAM 105 is omitted.

In the case where the game program 133 and the data 135 necessary for the image processing and the execution of the game are stored in the HDD 107, they are sequentially read out from the HDD 107 in accordance with the instructions from the CPU 103 and in response to the progress state of the processing, and are transferred to the RAM 105. However, in the explanation set forth below, from the same reason described above, a description as to readout of the data from the HDD 107 and the transfer to the RAM 105 is omitted.

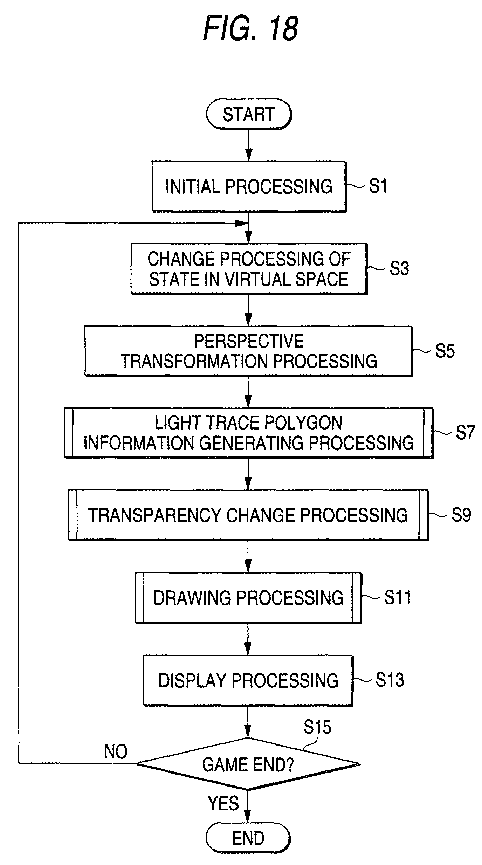

FIG. 18 shows a main flow of a display processing of this embodiment. At first, an initial processing is carried out (step S1). The initial processing includes initialization of the light trace polygon table 200, the current entry light source information 300, the preceding entry light source information 400, and the rendering information 600. Next, a state change processing in a virtual space is carried out (step S3). For example, in accordance with the program and the operation input of a user by the keypad 161, the processing for changing a position of a light source, a position of a camera, and a position of a character etc. is carried out.

Then, a perspective transformation processing of a changed virtual space is carried out (step S5). In the perspective transformation, coordinate values of the respective vertexes of a polygon in the world coordinate system are converted into coordinate values in the screen coordinate system. At this stage, the position of the light source on the display screen is calculated.

Next, a light trace polygon information generating processing is carried out (step S7). The light trace polygon information generating processing will be described later in detail. Then, a transparency change processing is carried out (step S9). The transparency change processing will be also described later in detail. A drawing processing is carried out using information obtained up to now (step S11). Then, a result of the drawing processing is displayed on the display screen (step S13).

Thereafter, it is judged whether or not the game is over (step S15). Whether or not the game is over is judged on the basis of whether or not a user orders an end of the game by operating the keypad 161 or whether or not a condition for the end of the game is satisfied in a story of the game. In the case where the game is not over (step S15: No route), the procedure returns to step S3. In the case where the game is over (step S15: Yes route), the procedure is ended.

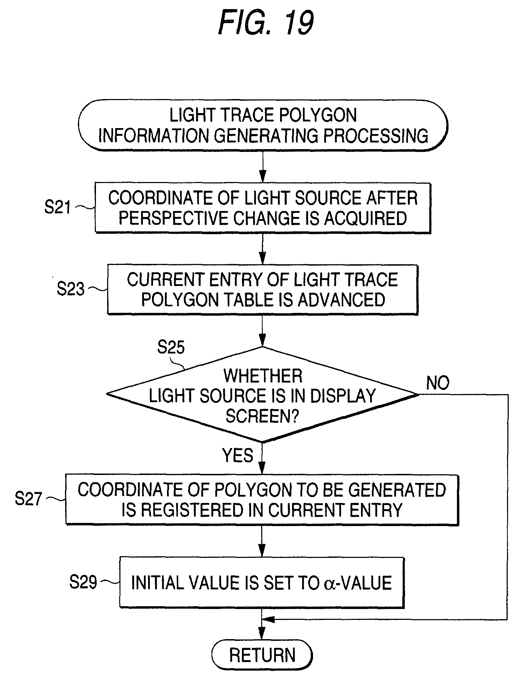

Next, the details of exemplary light trace polygon information generating processing will be described with reference to FIG. 19. FIG. 19 is a view showing an exemplary flow of the light trace polygon information generating processing. At first, as a result of the perspective transformation processing carried out at step S5, coordinates after the perspective transformation of the light source are acquired (step S21). By this, the current entry light source information 300 is obtained. If an entry already exists in the light trace polygon table 200, the preceding entry light source information 400 is also generated. As the preceding entry light source information 400, the current entry light source information 300 in the preceding display frame has only to be copied. By this, update history of the position of the light source is held in the light trace polygon table 200.

Next, the current entry of the light trace polygon table is advanced (step S23). Then, it is judged whether or not the light source is in the display screen (step S25). In the case where the light source is not in the display screen (step S25: No route), the procedure proceeds to step S9 of FIG. 18. On the other hand, in the case where the light source is in the display screen (step S25: Yes route), coordinates of a polygon to be generated are registered in the current entry of the light trace polygon table 200 (step S27). The values of the preceding entry light source information are substituted in the light source coordinate P1 of the above described expressions (1), (2), (3), (4), (5), (6) and (7), and the values of the current entry light source information are substituted in the light source coordinate P2, so that coordinates of the vertex 1 and the vertex 2 are calculated and are registered in the light trace polygon table 200. In the case where the light source first appears on the display screen, the coordinate of the vertex 1 and the vertex 2 can not be calculated. Thus, in this case, step S27 is skipped. Then, an initial value is set to an $\alpha$ value of the current entry (step S29). The initial value of the $\alpha$ value is, for example, 1. Thereafter, the procedure proceeds to step S9 of FIG. 18.

If a processing for advancing a current entry exits at the position of step S23, even in the case where any entries are not registered in the light trace polygon table 200, the current entry is advanced. There is also a case where a light source once appearing on the display screen disappears from the display screen, and again appears on the display screen. In this case, if the current entry is not advanced at step S23, there is generated such a light trace polygon as to connect the position of the light source before it disappears from the display screen and the position of the light source again appearing on the display screen. If the current entry is advanced at step S23, a vacant entry is put, so that the phenomenon as described above does not occur.

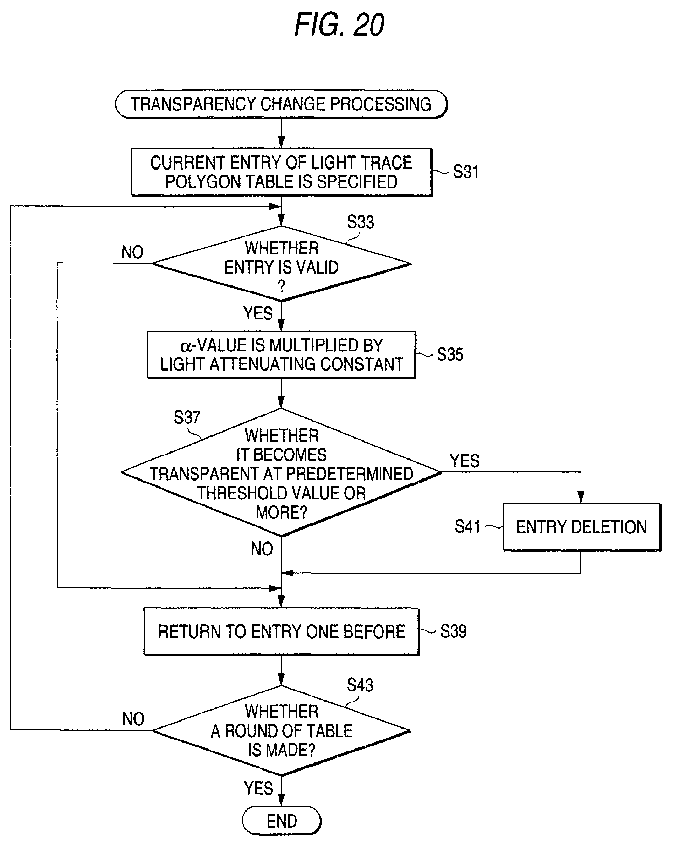

Next, the details of the transparency change processing at step S9 will be described with reference to FIG. 20. At first, the current entry of the light trace polygon table 200 is specified (step S31). Then, it is judged whether or not the entry under processing is valid (step S33). Whether or not it is valid is judged by whether or not the $\alpha$ value is stored in the entry under processing. Incidentally, in the first case, it is judged whether or not the current entry is valid. If the entry under processing is invalid, that is, it is void (step S33: No route), the procedure proceeds to step S39.

In the case where it is judged that the entry under processing at step S33 is valid (step S33: Yes route), the $\alpha$ value is multiplied by a light attenuating constant (step S35). The light attenuating constant is a constant for decreasing the $\alpha$ value to raise transparency. When the transparency is raised, the brightness of the light trace polygon becomes low, so that it is seen as if light is attenuated. In this embodiment, even if the initial value 1 of the $\alpha$ value is set in the current entry of step S29 of FIG. 19, the value is immediately lowered by the light attenuating constant at this step S35. Thus, a value (about 1.42) which becomes 1 by being multiplied by 0.7 may be the initial value.

Next, it is judged whether or not the transparency becomes a predetermined threshold value or more, that is, whether or not the $\alpha$ value becomes a predetermined threshold value or less (step S37). If the transparency becomes the predetermined threshold value or more (step S37: Yes route), even if the light trace polygon is still drawn, it does not appear on the display screen, so that the processing becomes wasteful. Alternatively, memory capacity necessary for the processing is increased. Thus, the information of the entry is deleted (step S41). By suitably determining the number of entries, the threshold value of the $\alpha$ value, and the light attenuating constant, it is possible to delete an entry before the entries of the light trace polygon table 200 become insufficient.

If the transparency does not become the predetermined threshold value or more (step S37: No route) or after the entry information is deleted, the procedure returns to an entry one before in the light trace polygon table 200. Then, it is judged whether processing of all elements of the light trace polygon table 200 is made (step S43). If processing all elements is not made (step S43: No route), the procedure returns to step S33. If processing all elements is made (step S43: Yes route), the procedure proceeds to step S 11 of FIG. 18.

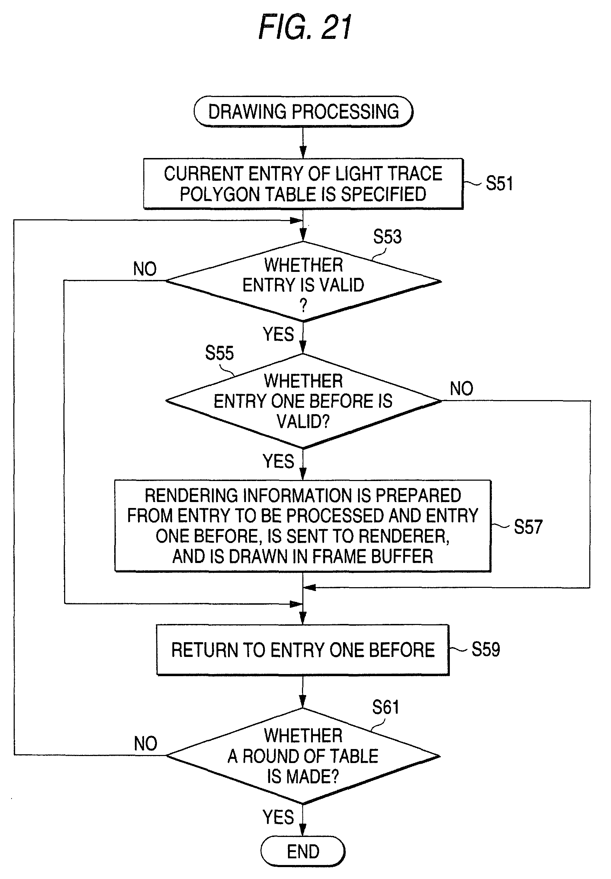

FIG. 21 shows the details of the drawing processing of the step S11 of FIG. 18. At first, the current entry of the light trace polygon table 200 is specified (step S51). Then, it is judged whether or not the entry to be processed is valid (step S53). Here, whether or not the entry is valid is judged on the basis of whether or not the vertex 1, the vertex 2, and the data of the $\alpha$ value are registered. If the entry is not valid (step S53: No route), the procedure proceeds to step S59.

If the entry is valid (step S53: Yes route), it is judged whether or not the previous entry is also valid (step S55). That is, it is judged whether or not two consecutive entries are valid. If the previous entry is not valid (step S55: No route), the procedure proceeds to step S59. On the other hand, if the previous entry is also valid (step S55: Yes route), rendering information is formed from the data of the entry to be processed and the previous entry, and is drawn in the frame buffer (step S57).

Drawing is a rendering processing using the rendering information by, for example, the graphics processing portion 111. That is, the graphics processing portion 111 maps the light trace texture shown in FIG. 12 to the light trace polygon. More particularly, the graphics processing portion 111 calculates a color of a material of each of pixels in the inside of the light trace polygon by interpolating the colors (RGB) at the respective vertexes specified by the rendering information. Besides, the graphics processing portion 111 interpolates texture coordinates at the respective vertexes to calculate texture coordinates of the respective pixels in the inside of the light trace polygon. Further, the graphics processing portion 111 calculates texel values from the calculated texture coordinates. Then, the graphics processing portion 111 blends the color of the material of each of the pixels of the light trace polygon and the texel value of the pixel, so that the color of each of the pixels of the light trace polygon is calculated.

Next, $\alpha$ blending (semitransparent synthesis) of the light trace polygon and the polygon behind the light trace polygon is carried out. That is, the $\alpha$ values at the respective vertexes of the light trace polygon specified by the rendering information are interpolated, so that the $\alpha$ values at the respective pixels are calculated. Then, the color of each of the respective pixels of the above calculated light trace polygon and the color of the same pixel behind the light trace polygon are subjected to $\alpha$ blending using the $\alpha$ value at each of the pixels.

By this, in the case where the $\alpha$ value is large, since the transparency is low, the light trace polygon appears on the display screen, and on the other hand, in the case where the $\alpha$ value is small, since the transparency is high, the light trace polygon appears transparently on the display screen.

Incidentally, the $\alpha$ value is inclined even in the same light trace polygon. For example, in the state of FIG. 11, as shown in FIG. 14, although the same value $\alpha 3$ is specified to the line segment P3a and P3b, the different value $\alpha 2$ is specified to the line segment P2a and P2b. In this case, $\alpha 3 > \alpha 2$. Thus, although the color of the light trace polygon is lightly displayed in the portion close to the line segment P3a and P2b, the color of the light trace polygon is darkly displayed in the portion close to the line segment P3a and P3b.

The α value at the joint of the light trace polygons is the same. Thus, in the example of FIG. 11, the α value is continuous on the movement locus of the light source on the display screen from P3 to P2 and P1. Accordingly, the light trace is displayed in a natural form such that it gradually disappears from P3 to P1. Further, the light trace texture mapped to the light trace polygon is, as shown in FIG. 12, such a texture that the brightness is high at the center in the vertical direction, and the brightness of a position becomes low as the position approaches the end in the vertical direction. Thus, in cooperation with setting of the α value, such a light trace as to gradually become thin and narrow is displayed. Further, even at the joint of the light trace polygons, by setting of the transparency, it is possible to prevent generation of jagged lines.

The explanation of FIG. 21 will now be resumed. When the drawing to the frame buffer 112 is carried out at step S57, the procedure proceeds to step S59, and the entry to be processed is returned to the entry one before. Then, it is judged whether or not processing all elements of the light trace polygon table 200 is made (step S61). If processing all elements of the light trace polygon table is made and the processing is carried out (step S61: Yes route), the procedure proceeds to step S13 of FIG. 18. On the other hand, in the case where all of the light trace polygon table 200 is not processed (step S61: No route), the procedure returns to step S53.

(Example of display)

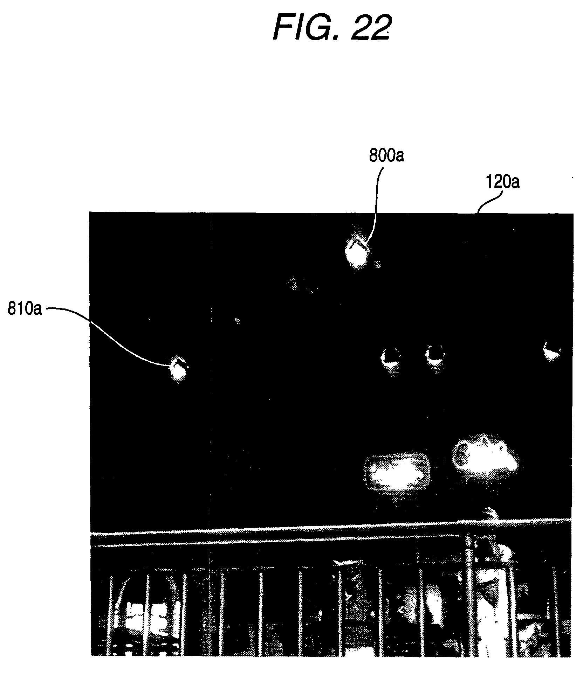

FIG. 22 shows a first state. Multiple lights or the like are displayed on a display screen 120a of FIG. 22. In this example, a sight line of a camera is moved upward so that the light trace of the light is displayed. Incidentally, pay attention to a light 800a and a light 810a, the light traces of which are easy to recognize.

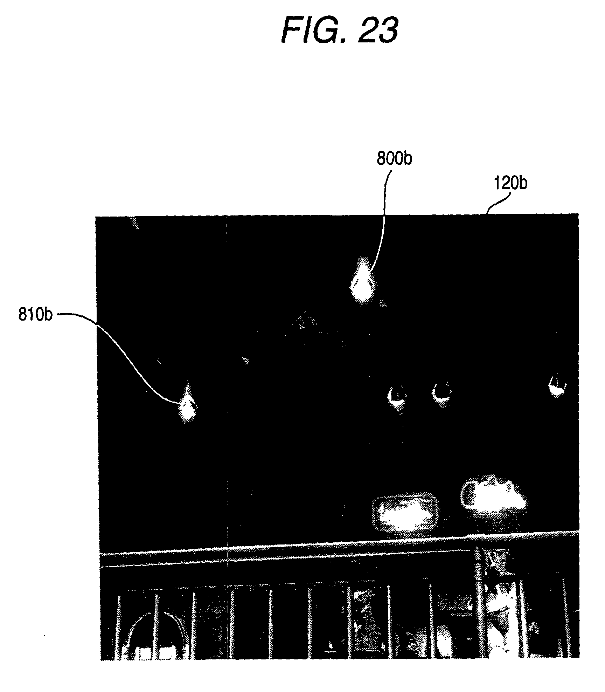

FIG. 23 shows a display screen 120b in a next display frame. In FIG. 23, since the sight line of the camera is moved upward from FIG. 2, the light is relatively moved downward in the display screen. The light 800b is displayed in such a form that a short and upward tapered light trace is added thereto. Also, a narrow and thin light trace is added to the light 810b.

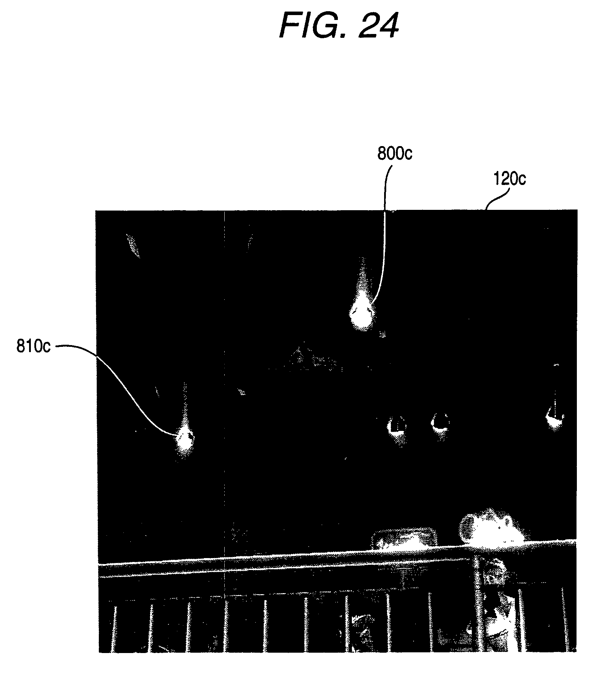

FIG. 24 shows a display screen 120c in a next display frame of FIG. 23. In FIG. 24, the sight line of the camera is further moved upward from FIG. 23. Thus, a light trace which becomes thin and narrow as it goes upward, is added to the light 800c. The length of the light trace becomes longer than that of FIG. 23. A light trace which is narrow and becomes thin as it goes upward, is also added to the light 810c.

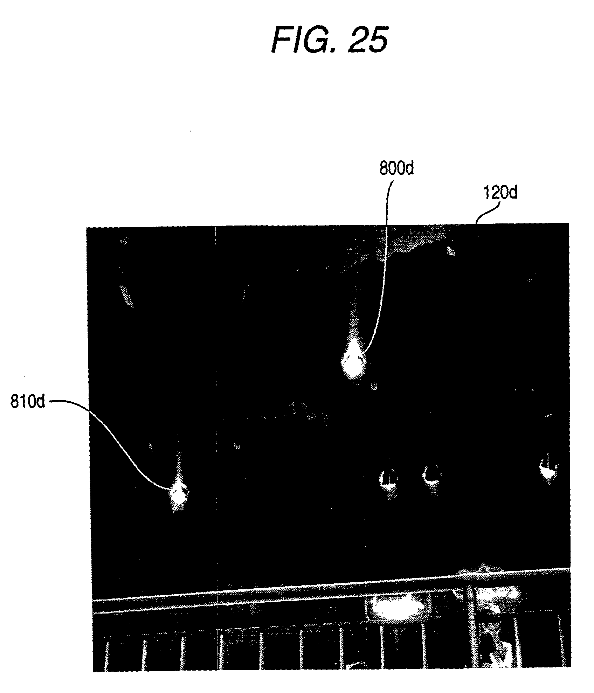

FIG. 25 shows a display screen 120d in a next display frame of FIG. 24. In FIG. 25, the sight line of the camera is further moved upward from FIG. 24. The light trace added to the light 800d becomes longer. However, it becomes thin as it goes upward. Similarly, the light trace added to the light 810d also becomes longer.

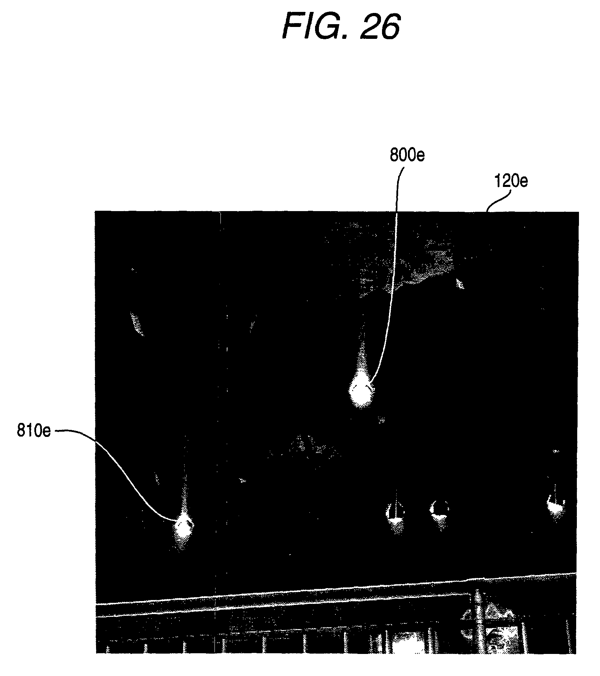

FIG. 26 shows a display screen 120e in a next frame of FIG. 25. In FIG. 26, the sight line of the camera is further moved upward from FIG. 25. And also, a light trace added to a light 810e is about the same as that of FIG. 25. That is, since the light trace polygon is deleted when its transparency becomes a predetermined threshold value or less, the light trace does not exceed a certain length.

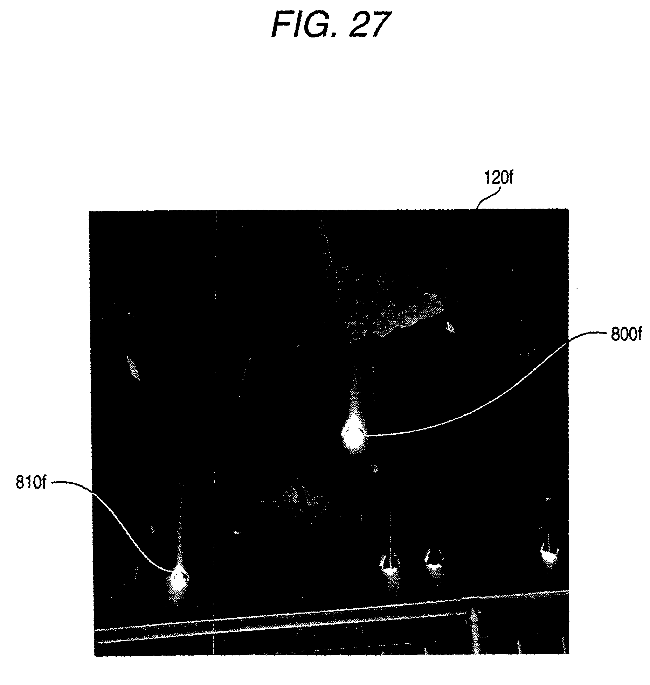

FIG. 27 shows a display screen 120f in a next display frame of FIG. 26. In FIG. 27, the sight line of the camera is further moved upward from FIG. 26. A light trace added to a light 800f is about the same as that of FIG. 26. A structure added to a light 810f is also about the same as that of FIG. 26.

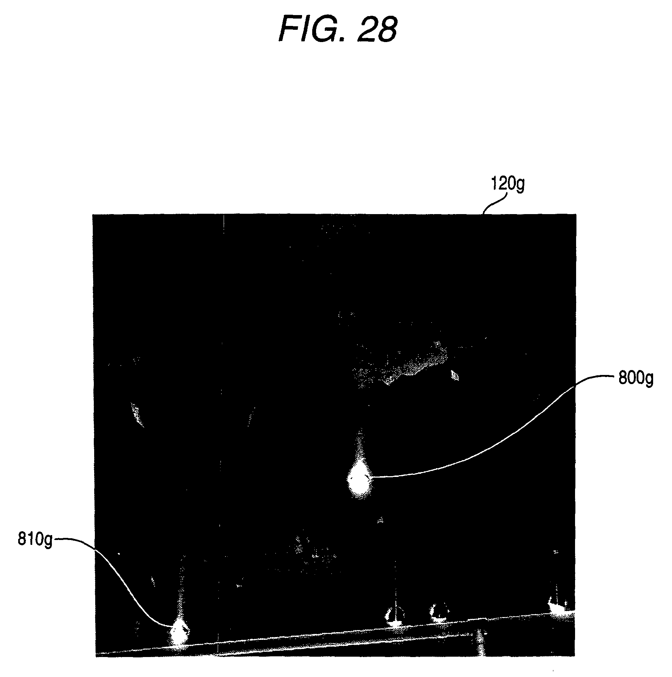

FIG. 28 shows a display screen 120g in a next display frame of FIG. 27. In FIG. 28, the sight line of the camera is further moved upward from FIG. 27. A light trace added to a light 800g is about the same as that of FIG. 27. A structure added to a light 810g is also about the same as that of FIG. 27.

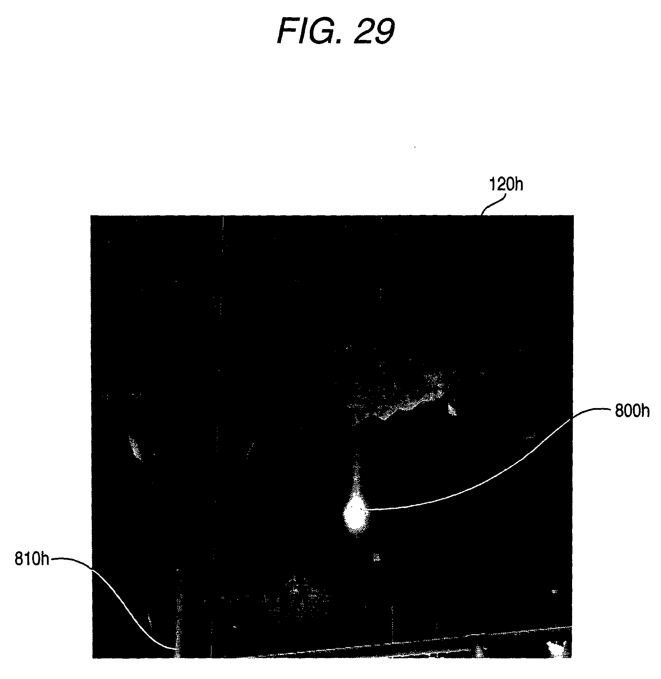

FIG. 29 shows a display screen 120h in a next display frame of FIG. 28. In FIG. 29, the sight line of the camera is further moved upward from FIG. 28. A light trace added to a light 800h is about the same as that of FIG. 28. On the other hand, a light 810 is out of the display screen 120h. However, a light trace 810h is displayed. According to the algorithm of this embodiment shown in FIGS. 18, 19, 20 and 21 of this embodiment, when the light source is out of the display screen, the light trace polygon is not generated. However, since the processing of the light trace polygon table 200 is carried out, the light trace polygon generated before is displayed until it is deleted through the threshold value of the α value. FIG. 29 shows this state.

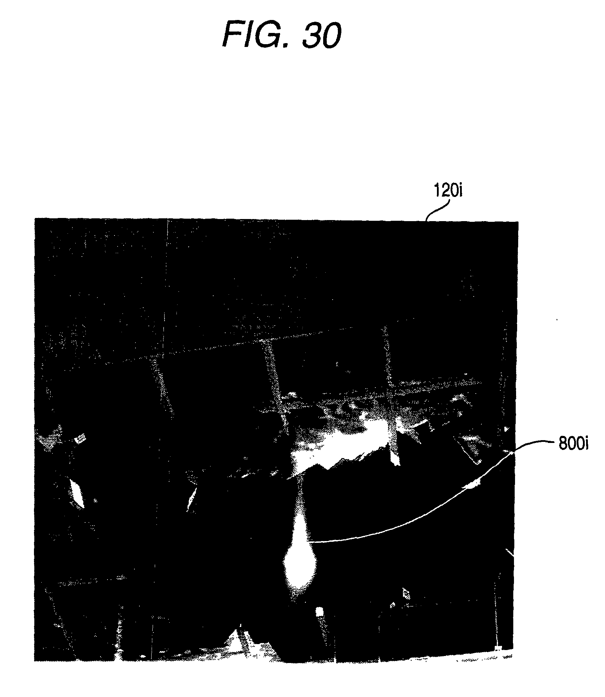

FIG. 30 shows a display screen 120i in a next display frame of FIG. 29. In FIG. 30, the sight line of the camera is further moved upward from FIG. 29. A light trace added to a light 800i is about the same as that of FIG. 29. Since the light 810 is already largely out of the display screen, the light trace polygon of the light 810 is also not displayed.

As described above, in this embodiment, a rectangular polygon of a width corresponding to the size of the light source is generated on a new movement path of the light source for each display frame (step S27 (FIG. 19), step S57 (FIG. 21)). Since the polygon is generated on the new movement path of the light source for each frame, a band-like polygon line is displayed on the movement path of the light source.

A texture in which a brightness distribution in the direction intersecting with the movement locus of the light source is gradually changed in a predetermined mode, and is mapped to the respective polygons forming the band (step S57). More specifically, the texture has such a brightness distribution in the direction perpendicular to the movement locus of the light source that the brightness of a position becomes high as the position approaches the center and becomes low as it approaches both ends.

The generated polygon is drawn while the transparency is raised for each display frame (step S35 (FIG. 20), step S57). The earlier the generation of the polygon, the higher the transparency. That is, as the distance from the present light source position becomes large, the polygon becomes transparent. As the polygon becomes transparent, the portion of low brightness of the texture mapped to the polygon is not substantially displayed. As a result, as the light trace goes away from the position of the light source, the width becomes narrow.

The transparency is gradually increased on the movement locus of the light source on the display screen from the present light source position to the light source position appearing at first. Thus, the width of the light trace gradually becomes narrow, and the joint of the polygons becomes hard to recognize, that is, a display is carried out so that jagged edges are not generated.

Since the transparency of each of the polygons is raised for each frame, the transparency of each polygon is inspected, and a polygon of transparency of a predetermined threshold value or more is discarded (step S41 (FIG. 20)) by deleting the entry of the light trace polygon table 200. By this, it becomes possible to effectively use a memory and to improve processing efficiency.

The light trace polygon is generated one by one for each display frame. Thus, there does not occur such a case that multiple light trace polygons are seen to be overlapped with each other as in the case where multiple polygons are generated for each display frame. Accordingly, it is possible to always display the light trace at a natural brightness.

The above described embodiment of the invention can be variously modified. For example, it is possible to adopt such a structure that the current entry light source information 300 and the preceding entry light source information 400 are contained in the light trace polygon table 200. Further, the light trace texture of FIG. 12 is only an example, and it is also possible to adopt such a structure that, for example, include a portion having the highest brightness at a place shifted to the upside or downside in the horizontal direction, not the center in the horizontal direction.

With respect to the movement of the light source on the display screen, the light source is moved on the display screen not only in the case where the light source is moved in a virtual three-dimensional space, but also in the case where a camera is moved. That is, it depends on the relative relation between the light source and the view point.

Moreover, FIG. 1 is an example, and various modifications can be made. It is arbitrary whether or not the communications interface 115 is provided. Since this embodiment does not directly relate to sound processing, it is not necessary to provide the sound processing portion 109.

In addition, the CD-ROM is an example of a recording medium, and other recording medium such as an inner memory like a ROM, a CD-ROM, a DVD-ROM, a memory cartridge, a floppy disk, a magnetic disk, or a DVD-RAM may be used. In that case, it is necessary to change the CD-ROM drive 113 to a drive which can read the corresponding medium.

Further, although the foregoing embodiment is an example in the case where implementation is made by a computer program, implementation can also be made by a combination of the computer program and a dedicated apparatus such as an electronic circuit, or only a dedicated apparatus such as an electronic circuit.

Although the invention has been concretely described on the basis of the embodiment, the invention is not limited to the above embodiment. Modifications can be suitably made within the range without departing from the gist of the invention. For example, in the above embodiment, the description has been made of the case where the invention is realized in the home game machine as a platform, however, the invention may be realized in a normal computer, an arcade game machine, or the like as a platform. It is also conceivable that the invention is realized in a portable information terminal, a car navigation system, or the like as a platform.

Moreover, the program and the data for realizing the invention are not limited to a mode provided by a recording medium such as a CD-ROM detachably attached to a computer or a game machine. That is, it is possible to adopt such a mode that the program and the data for realizing the invention are recorded in a memory at the side of other equipment on the network 151 connected through the communications interface 115 and the communications line 141, and the program and the data are sequentially stored in the RAM 105 through the communications line 141 and are used as the need arises.

As described above, according to the invention, even if a light source is drawn in any direction, afterglow expression with natural brightness can be realized.

**Claims**

1. A computer readable recording medium recording a program for causing a light source to be displayed on a game screen, the program causing a computer:

   to acquire update history of a position of the light source moving in the game screen;
   to judge a movement locus of the light source based upon the acquired update history;

to generate a semitransparent object for which brightness corresponding to a distance from the movement locus is set, on the judged movement locus;

to set transparency corresponding to a distance from the position of the light source for the generated semitransparent object; and

to display the generated semitransparent object with the set transparency.

2. The recording medium according to claim 1, wherein:

the game screen is updated for each frame display period;

generation of the semitransparent object is carried out for each of the frame display periods; and

the displaying further comprises setting the transparency of each of the semitransparent objects generated for each of the frame display periods close to transparent as time elapses, and displaying each of the semitransparent objects.

3. The recording medium according to claim 2, further comprising previously providing a texture image in which brightness on an arbitrary line segment is highest, and brightness decreases as a distance from the line segment increases;

wherein the generating further comprises relating the texture image to each of the semitransparent objects at a positional relationship so that the arbitrary line segment is parallel with the movement locus of the light source; and

wherein the displaying further comprises displaying the related texture image on each of the semitransparent objects.

4. The recording medium according to claim 2, wherein the semitransparent object disappears when transparency of the semitransparent object equals or is less than a predetermined value.

5. The recording medium according to claim 2, wherein the generating further comprises corresponding a width of each of the semitransparent objects in a direction orthogonal to the movement locus to a size of the light source on the screen.

6. A program for causing a light source to be displayed on a game screen, the program causing a computer

to acquire update history of a position of the light source moving in the game screen;

to judge a movement locus of the light source based upon the acquired update history;

to generate a semitransparent object for which brightness corresponding to a distance from the movement locus is set, on the judged movement locus;

to set transparency corresponding to a distance from the position of the light source for the generated semitransparent object; and

to display the generated semitransparent object with the set transparency.

7. The program according to claim 6, wherein:

the game screen is updated for each frame display period;

generation of the semitransparent object is carried out for each of the frame display periods; and

the displaying further comprises setting the transparency of each of the semitransparent objects generated for each of the frame display periods to transparent as time elapses, and displaying each of the semitransparent objects.

8. The program according to claim 7, further comprising previously providing a texture image in which brightness on an arbitrary line segment is highest, and brightness decreases as a distance from the line segment increases;

wherein the generation further comprises relating the texture image to each of the semitransparent objects at a positional relationship so that the arbitrary line segment is parallel with the movement locus of the light source; and

wherein the displaying further comprises displaying the related texture image on each of the semitransparent objects.

9. The program according to claim 7, wherein the semitransparent object disappears when the transparency of the semitransparent object equals or is less than a predetermined value.

10. The program according to claim 7, wherein the generating further comprises corresponding a width of each of the semitransparent objects in a direction orthogonal to the movement locus to a size of the light source on the screen.

11. A game screen display method for causing a light source to be displayed on a game screen, the game screen display method comprising:

acquiring update history of a position of the light source moving in the game screen;

judging a movement locus of the light source based upon the acquired update history;

generating a semitransparent object for which brightness corresponding to a distance from the movement locus is set, on the judged movement locus;

setting transparency corresponding to a distance from the position of the light source for the generated semitransparent object; and displaying the generated semitransparent object with the set transparency.

12. The game screen display method according to claim 11, wherein:

the game screen is updated each frame display period;

generation of the semitransparent object is carried out for each of the frame display periods; and

the displaying further comprises setting the transparency of each of the semitransparent objects generated for each of the frame display periods to transparent as time elapses, and displaying each of the semitransparent objects.

13. The game screen display method according to claim 12, further comprising:

previously providing a texture image in which brightness on an arbitrary line segment is highest, and brightness decreases as a distance from the line segment increases;

wherein the generating further comprises relating the texture image to each of the semitransparent objects at a positional relationship so that the arbitrary line segment is parallel with the movement locus of the light source; and

wherein the displaying further comprises displaying the related texture image on each of the semitransparent objects.

14. The game screen display method according to claim 12, wherein the semitransparent object disappears when transparency of the semitransparent object equals or is less than a predetermined value.

15. The game screen display method according to claim 12, wherein the generating further comprises corresponding a width of each of the semitransparent objects in a direction orthogonal to the movement locus to a size of the light source on the screen.

16. A game screen display apparatus, comprising:

a computer readable recording medium recording a program for causing a light source to be displayed on a display screen;

a computer for reading out at least a part of the program from the recording medium and executing the program; and

the display screen for displaying a game realized by the program,

wherein the computer causes:

acquisition of update history of a position of the light source moving in the display screen;

judgment of a movement locus of the light source based upon the acquired update history;

generation of a semitransparent object for which brightness corresponding to a distance from the movement locus is set, on the judged movement locus;

setting of transparency corresponding to a distance from the position of the light source for the generated semitransparent object; and displaying of the generated semitransparent object with the set transparency.

17. The game screen display apparatus according to claim 16, wherein:

the game screen is updated each frame display period;

generation of the semitransparent object is carried out for each of the frame display periods; and

the displaying further comprises setting the transparency of each of the semitransparent objects generated for each of the frame display periods to transparent as time elapses, and displaying each of the semitransparent objects.

18. The game screen display apparatus according to claim 17, further comprising:

a previously provided texture image in which brightness on an arbitrary line segment is highest, and brightness of a position decreases as a distance from the line segment increases, the texture image being related to each of the semitransparent objects at a positional relationship so that the arbitrary line segment is parallel with the movement locus of the light source, and the displaying further comprises displaying the related texture image on each of the semitransparent objects.

19. The game screen display apparatus according to claim 17, wherein the semitransparent object disappears when transparency of the semitransparent object is equal to or less than a predetermined value.

20. The game screen display apparatus according to claim 17, wherein in the generation of the semitransparent objects, a width of each of the semitransparent objects in a direction orthogonal to the movement locus corresponds to a size of the light source on the screen.

# FIG. 1

101

119 — SOUND PROCESSING PORTION (109)

103 — CPU

104 — ROM

105 — RAM

GRAPHICS PROCESSING PORTION (111)

FRAME BUFFER (112)

107

HDD (108)

GAME PROGRAM AND DATA

CD-ROM DRIVE (113)

COMMUNICATIONS INTERFACE (115)

INTERFACE PORTION (117)

121

TV SET

SPEAKER — 122

DISPLAY SCREEN — 120

131: CD-ROM

135: DATA

133: GAME PROGRAM

141

151

NETWORK

161 — KEY PAD

171 — MEMORY CARD

# FIG. 2

```
┌─────────────────────────────────────┐
│  105                                │
│  ┌───────────────────────────────┐  │
│  │    LIGHT TRACE                │──┼─ 200
│  │    POLYGON TABLE              │  │
│  └───────────────────────────────┘  │
│  ┌───────────────────────────────┐  │
│  │   CURRENT ENTRY LIGHT         │──┼─ 300
│  │   SOURCE INFORMATION          │  │
│  └───────────────────────────────┘  │
│  ┌───────────────────────────────┐  │
│  │  PRECEDING ENTRY LIGHT        │──┼─ 400
│  │  SOURCE INFORMATION           │  │
│  └───────────────────────────────┘  │
│  ┌───────────────────────────────┐  │
│  │   LIGHT TRACE TEXTURE         │──┼─ 500
│  └───────────────────────────────┘  │
│  ┌───────────────────────────────┐  │
│  │   RENDERING INFORMATION       │──┼─ 600
│  └───────────────────────────────┘  │
└─────────────────────────────────────┘
```

# FIG. 3

120a

P1

## FIG. 4

200a

| | | 2041 ram 1 | 2042 ram 2 | 2043 ram 3 | 2044 ram 4 | | 2045 ram n |
|---|---|---|---|---|---|---|---|
| 2010 | VERTEX 1 | | | | | | |
| 2020 | VERTEX 2 | | | | | . . . . . . . . . . . . . | |
| 2030 | $\alpha$-VALUE | $\alpha 1$ | | | | | |

P1
(CURRENT)

## FIG. 5

| 3010 X-COORDINATE | 3020 Y-COORDINATE | 3030 Z-COORDINATE | 3040 RADIUS |
|---|---|---|---|
| P1x | P1y | P1z | Pr1 |

300a

## FIG. 6

| 4010 X-COORDINATE | 4020 Y-COORDINATE | 4030 Z-COORDINATE | 4040 RADIUS |
|---|---|---|---|
| | | | |

400a

## FIG. 7

## FIG. 8

| P2x | P2y | P2z | Pr2 |
| --- | --- | --- | --- |
| 3010 | 3020 | 3030 | 3040 |

300b

## FIG. 9

| P1x | P1y | P1z | Pr1 |
| --- | --- | --- | --- |
| 4010 | 4020 | 4030 | 4040 |

700b

## FIG. 10

200b

| | | 2041 ram 1 | 2042 ram 2 | 2043 ram 3 | 2044 ram 4 | | 2045 ram n |
|---|---|---|---|---|---|---|---|
| 2010 | VERTEX 1 | P1a | P2a | | | | |
| 2020 | VERTEX 2 | P1b | P2b | | | ·············· | |
| 2030 | α-VALUE | α1 | α2 | | | | |

P1    P2
(CURRENT)

## FIG. 11

600a

| | | 6050 POSITION COORDINATE | 6060 α-VALUE | 6070 TEXTURE COORDINATE | 6080 RGB |
|---|---|---|---|---|---|
| 6010 | VERTEX 1 | P2a (P2ax, P2ay, P2z) | α2 | a2 (u1, v1) | r1g1b1 |
| 6020 | VERTEX 2 | P2b (P2bx, P2by, P2z) | α2 | b2 (u2, v2) | r2g2b2 |
| 6030 | VERTEX 3 | P1a (P1ax, P1ay, P1z) | α1 | a1 (u3, v3) | r3g3b3 |
| 6040 | VERTEX 4 | P1b (P1bx, P1by, P1z) | α1 | b1 (u4, v4) | r4g4b4 |

## FIG. 12

## FIG. 13

## FIG. 14

| P3x | P3y | P3z | Pr3 |
|-----|-----|-----|-----|

300c

## FIG. 15

400c

| P2x | P2y | P2z | Pr2 |
|-----|-----|-----|-----|

## FIG. 16

200c

|  |  | 2041<br>ram 1 | 2042<br>ram 2 | 2043<br>ram 3 | 2044<br>ram 4 |  | 2045<br>ram n |
|--|--|------|------|------|------|--|------|
| 2010 | VERTEX 1 | P1a | P2a | P3a |  | ............. |  |
| 2020 | VERTEX 2 | P1b | P2b | P3b |  |  |  |
| 2030 | α-VALUE | α1 | α2 | α3 |  |  |  |

P1　　P2　　P3
(CURRENT)

## FIG. 17

600b

|  |  | 6050<br>POSITION<br>COORDINATE | 6060<br>α-VALUE | 6070<br>TEXTURE<br>COORDINATE | 6080<br>RGB |
|--|--|------|------|------|------|
| 6010 | VERTEX 1 | P3a (P3ax, P3by, P3z) | α3 | a2 (u1, v1) | r5g5b5 |
| 6020 | VERTEX 2 | P3b (P3bx, P3by, P3z) | α3 | b2 (u2, v2) | r6g6b6 |
| 6030 | VERTEX 3 | P2a (P2ax, P2ay, P2z) | α2 | a1 (u3, v3) | r7g7b7 |
| 6040 | VERTEX 4 | P2b (P2bx, P2by, P2z) | α2 | b1 (u4, v4) | r8g8b8 |

## FIG. 18

```
          ( START )
              │
              ▼
   ┌─────────────────────┐
   │  INITIAL PROCESSING  │──── S1
   └─────────────────────┘
              │
   ┌──────────┘
   │          ▼
   │  ┌─────────────────────┐
   │  │ CHANGE PROCESSING OF │──── S3
   │  │ STATE IN VIRTUAL SPACE│
   │  └─────────────────────┘
   │          │
   │          ▼
   │  ┌─────────────────────┐
   │  │     PERSPECTIVE      │──── S5
   │  │ TRANSFORMATION PROCESSING│
   │  └─────────────────────┘
   │          │
   │          ▼
   │  ┌─────────────────────────┐
   │  │   LIGHT TRACE POLYGON    │──── S7
   │  │ INFORMATION GENERATING PROCESSING│
   │  └─────────────────────────┘
   │          │
   │          ▼
   │  ┌─────────────────────────┐
   │  │ TRANSPARENCY CHANGE PROCESSING │──── S9
   │  └─────────────────────────┘
   │          │
   │          ▼
   │  ┌─────────────────────┐
   │  │  DRAWING PROCESSING  │──── S11
   │  └─────────────────────┘
   │          │
   │          ▼
   │  ┌─────────────────────┐
   │  │  DISPLAY PROCESSING  │──── S13
   │  └─────────────────────┘
   │          │
   │          ▼          S15
   │  NO  ◇───────────◇
   └─────│  GAME END?  │
         ◇───────────◇
              │ YES
              ▼
          ( END )
```

# FIG. 19

```
        ╭─────────────────────────────────────────╮
        │         LIGHT TRACE POLYGON             │
        │  INFORMATION GENERATING PROCESSING      │
        ╰─────────────────────────────────────────╯
                           │
                           ▼
        ┌─────────────────────────────────────────┐
S21 ────│  COORDINATE OF LIGHT SOURCE AFTER       │
        │   PERSPECTIVE CHANGE IS ACQUIRED        │
        └─────────────────────────────────────────┘
                           │
                           ▼
        ┌─────────────────────────────────────────┐
S23 ────│   CURRENT ENTRY OF LIGHT TRACE          │
        │    POLYGON TABLE IS ADVANCED            │
        └─────────────────────────────────────────┘
                           │
      S25                  ▼
          ◇─────────────────────────────────◇
          │            WHETHER               │      NO
          │  LIGHT SOURCE IS IN DISPLAY      │─────────────┐
          │            SCREEN?               │             │
          ◇─────────────────────────────────◇             │
                     YES │                                 │
                         ▼                                 │
        ┌─────────────────────────────────────────┐       │
S27 ────│ COORDINATE OF POLYGON TO BE GENERATED   │       │
        │   IS REGISTERED IN CURRENT ENTRY        │       │
        └─────────────────────────────────────────┘       │
                           │                               │
                           ▼                               │
        ┌─────────────────────────────────────────┐       │
S29 ────│  INITIAL VALUE IS SET TO α-VALUE        │       │
        └─────────────────────────────────────────┘       │
                           │                               │
                           ▼◄──────────────────────────────┘
                    ╭──────────────╮
                    │   RETURN     │
                    ╰──────────────╯
```

## FIG. 20

TRANSPARENCY CHANGE PROCESSING

CURRENT ENTRY OF LIGHT TRACE POLYGON TABLE IS SPECIFIED — S31

S33
WHETHER ENTRY IS VALID ? — NO

YES

$\alpha$-VALUE IS MULTIPLIED BY LIGHT ATTENUATING CONSTANT — S35

S37
WHETHER IT BECOMES TRANSPARENT AT PREDETERMINED THRESHOLD VALUE OR MORE? — YES

ENTRY DELETION — S41

NO

RETURN TO ENTRY ONE BEFORE — S39

S43
WHETHER A ROUND OF TABLE IS MADE? — NO

YES

END

## FIG. 21

```
        ( DRAWING PROCESSING )
                   │
                   ▼
   ┌───────────────────────────────┐
   │ CURRENT ENTRY OF LIGHT TRACE  │── S51
   │  POLYGON TABLE IS SPECIFIED   │
   └───────────────────────────────┘
                   │
    ┌──────────────┤
    │              ▼         S53
    │         ◇ WHETHER ◇
  NO│◄────────  ENTRY IS VALID
    │              ?
    │              │ YES
    │              ▼
    │      S55  ◇ WHETHER ◇
    │         ◇ ENTRY ONE BEFORE IS ◇──── NO ──┐
    │              VALID?                        │
    │              │ YES                         │
    │              ▼                             │
    │   ┌─────────────────────────────────┐    │
    │   │ RENDERING INFORMATION IS PREPARED│    │
    │   │ FROM ENTRY TO BE PROCESSED AND   │── S57│
    │   │ ENTRY ONE BEFORE, IS SENT TO     │    │
    │   │ RENDERER, AND IS DRAWN IN        │    │
    │   │ FRAME BUFFER                     │    │
    │   └─────────────────────────────────┘    │
    │              │◄──────────────────────────┘
    │              ▼
    │   ┌─────────────────────────────┐
    │   │  RETURN TO ENTRY ONE BEFORE │── S59
    │   └─────────────────────────────┘
    │              │
    │              ▼        S61
    │         ◇ WHETHER ◇
  NO│◄────────  A ROUND OF TABLE
    │            IS MADE?
                   │ YES
                   ▼
                ( END )
```

# FIG. 22

# FIG. 23

## FIG. 24

## FIG. 25

# FIG. 26

# FIG. 27

## FIG. 28

# FIG. 29

# FIG. 30

120i

800i